(19) Europäisches Patentamt
European Patent Office
Office européen des brevets

(11) EP 1 777 550 A1

(12) EUROPEAN PATENT APPLICATION

(43) Date of publication:
25.04.2007 Bulletin 2007/17

(51) Int Cl.:
*G01S 13/90* (2006.01)

(21) Application number: 06021179.4

(22) Date of filing: 09.10.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 11.10.2005 IT MI20051912

(71) Applicants:
• Tele-Rilevamento Europa S.R.L.
20149 Milano (IT)
• Politecnico Di Milano
20133 Milano (IT)

(72) Inventors:
• Ferretti, Alessandro
20127 Milano (IT)
• Perissin, Daniele
20017 Rho (Milano) (IT)
• Prati, Claudio
20121 Milano (IT)
• Rocca, Fabio
20133 Milano (IT)

(74) Representative: Pesce, Michele
Giambrocono & C. S.p.A.
Via Rosolino Pilo, 19/B
I-20129 Milano (IT)

(54) **Data aquisition method and system, use of dihedra for data acquisition**

(57) The data acquisition method consists of illuminating an objective by means of a sensor movable along a predetermined trajectory and irradiating an electromagnetic radiation of a predetermined frequency and a predetermined angle of incidence to the ground, and measuring the radiation reflected by the objective. The electromagnetic radiation is irradiated along a predetermined axis, parallel to a reference axis and inclined to an axis substantially, but not necessarily, perpendicular to the trajectory and constant with time. The data acquisition system comprises at least one sensor movable along a predetermined trajectory and irradiating an electromagnetic radiation of a predetermined frequency and a predetermined angle of elevation to an environment, and arranged to measure the radiation reflected by one or more objectives. The sensor irradiates along the predetermined axis. The objectives comprise dihedra.

FIG. 7

EP 1 777 550 A1

**Description**

The present invention relates to a data acquisition method and system, and to the use of dihedra for data acquisition.

Data acquisition according to the present invention is achieved by synthetic aperture radars or SARs.

The SARs are positioned on board aeroplanes or artificial satellites and comprise antennas arranged to illuminate (by electromagnetic radiation) along a direction normally substantially perpendicular to the satellite trajectory, or at most rotated through small angles to simplify processing of the measured data. This direction is not necessarily constant with time.

In practice, by illuminating by means of electromagnetic radiation and receiving the radiation reflected from the ground and from the objectives present on it, the satellite SARs are able to measure the shape of the terrain and/or of objectives positioned on the ground such as constructions, etc.

However, SARs present the drawback that the characteristics of objectives which each SAR is able to identify depend both on the trajectory (i.e. on the angles with respect to a predetermined reference system with which the SAR radar illuminates or sees the objective) and on the frequency of the irradiated radiation.

In this respect, synthetic aperture radars (SARs) operating at different frequency and/or different angles of incidence to the same reference system are known to measure different characteristics of the objectives on the terrain; in other words, different SARs (of different frequency) mounted on different satellites (of different trajectories) effect different amplitude and phase measurements on the signal reflected by the same objectives on the ground.

Consequently, amplitude and phase measurements obtained by satellite SARs with different frequencies, trajectory and platform attitude are mutually incoherent; i.e. the data measured by a first SAR with a given trajectory and a given frequency are not comparable with those of a different SAR of different trajectory and/or frequency.

It should be noted that this problem has been strongly felt for years by the experts of this sector, but a solution had not been found up to the present time.

Evident proof of this is given by SAR interferometry in which the coherent combination of different SAR data can be obtained only if the parameters of frequency and/or angles of incidence are practically coincident.

The technical aim of the present invention is therefore to provide a data acquisition method and system and to indicate the use of dihedra pre-existing on the territory for data acquisition, which enable the stated technical drawbacks of the known art to be eliminated.

Within the framework of this technical aim an object of the invention is to provide a method and system and to indicate the use of dihedra pre-existing on the territory by which ground measurements can be made enabling coherent data to be obtained independently both of the trajectory of the satellite on which the radar is positioned, and of the frequency of the electromagnetic radiation irradiated by the SAR itself.

In practice, according to the present invention a predetermined group of objectives on the terrain can be measured by a satellite SAR lying in any orbit and with any frequency, in a manner coherent with the measurements effected by another satellite SAR taken as reference with any orbit, with any fixed or variable orientation of the antenna along a direction either parallel (azimuth direction) or perpendicular (range direction) to the trajectory and of any frequency.

A further object of the invention is to provide a method and system and to indicate the use of dihedra pre-existing on the territory which enable the measurements of any SAR mission to be linked together by rendering them coherent, i.e. comparable in amplitude and phase.

The technical aim, together with these and further objects are attained, according to the present invention, by providing a method and system, and indicating the use of dihedra pre-existing on the territory, in accordance with the accompanying claims.

Advantageously the method, the system, and the use of pre-existing dihedra according to the invention enable the data relative to numerous missions of different measurements to be linked together, to obtain in particular:

-    an increase in the update rate (in particular enabling more operative missions to be used within the same time period, such as ERS, ENVISAT and Radarsat satellite platforms);
-    the coherent use of historical data obtained from a no longer operative mission with the data of a new mission of different characteristics;
-    the measurement of displacements of objectives on the terrain (by measuring phase variations with time) from different viewing angles with consequent improvement in the decomposition of horizontal and vertical movement components.

Further characteristics and advantages of the invention will be more apparent from the description of a preferred but non-exclusive embodiment of the data acquisition method and system and of the description of the use of dihedra pre-existing on the territory for data acquisition according to the invention, illustrated by way of non-limiting example in the accompanying drawings.

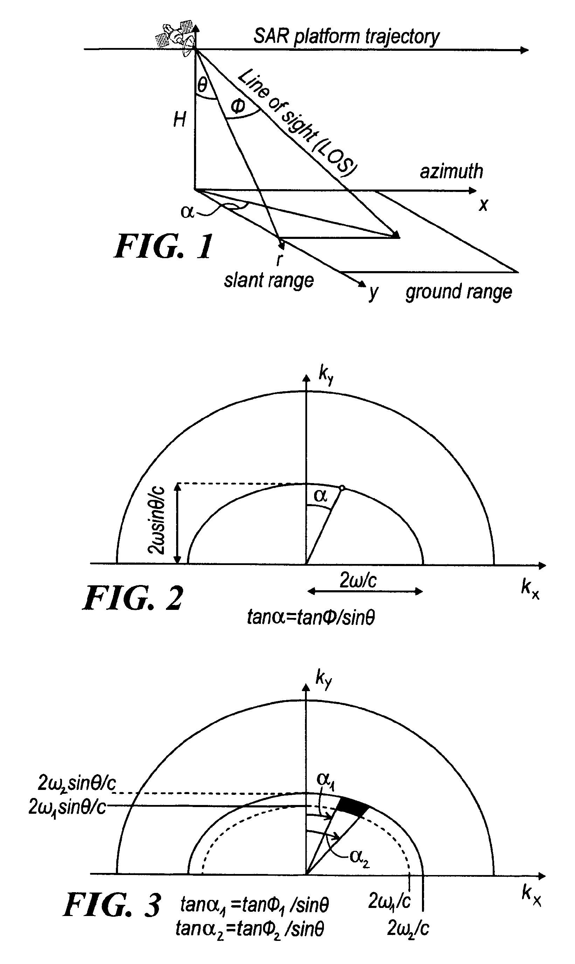

Figure 1 shows the geometry of a synthetic aperture radar or SAR indicating the azimuth direction (parallel to the satellite trajectory) and ground range direction (perpendicular to the azimuth and parallel to the terrain), the antenna aiming direction (called line of sight or LOS) being identified by two angles:

- θ (off-nadir) defined in the plane perpendicular to the azimuth;
- φ (squint) defined in the plane of slant-range which contains the satellite trajectory and forms an angle θ to the vertical.

The projection of the LOS onto the azimuth and ground range plane forms an angle α to the ground range direction which is linked to the off-nadir and squint angles by the relationship:

$$\tan(\alpha) = \frac{\tan(\phi)}{\sin(\theta)} \qquad (1)$$

Figure 2 is a diagram showing the spectrum wave numbers of the objective illuminated by the SAR at pulsation ω (equal to the frequency multiplied by 2π) and off-nadir and squint angles θ and φ;

Figure 3 is a diagram showing the wave numbers illuminated by the SAR of frequency band between a minimum value ω1 and a maximum value ω2 and by an antenna with a radiation beam with aperture in the slant range plane perpendicular to the sensor trajectory comprised between two values φ1 and φ2;

Figure 4 is a diagram showing the variation in the band of wave numbers illuminated by the SAR following a change only in the off-nadir angle θ;

Figure 5 is a diagram showing the variation in the band of wave numbers illuminated by the SAR following a change only in the squint angle φ;

Figure 6 is a diagram showing the variation in the band of wave numbers illuminated by the SAR following a change only in the pulsation angle ω;

Figure 7 shows a dihedral objective orientated at an angle α; and

Figure 8 is a diagram showing the spectral pattern in the wave number plane of a dihedron orientated at an angle α.

The loss of radar target coherence as the characteristics of SAR missions vary is described in the spectral domain.

The spectral components of ground targets illuminated by the SAR are identified by the wave numbers in the mutually perpendicular azimuth and ground range directions of a given mission taken as reference.

The azimuth wave numbers have the following general expression which depends on the SAR angular frequency (ω) and the squint angle (φ):

$$k_x = \frac{2\omega}{c}\sin(\phi) \qquad (2)$$

wherein c indicates the electromagnetic wave propagation velocity, approximately equal to the velocity of light in a vacuum.

The ground range wave numbers have the following general expression which depends not only on ω and φ, but also on the off-nadir angle θ:

$$k_y = \frac{2\omega}{c}\cos(\phi)\sin(\theta) \qquad (3)$$

By squaring and adding the equations (2) and (3), the following equation is obtained:

$$k_x^2 + \frac{k_y^2}{\sin^2(\theta)} = \frac{4\omega^2}{c^2} \qquad (4)$$

Equation (4) or, equivalently, the pair of equations (2) and (3) define within the wave number plane the spectral component of a generic target measured by the SAR which illuminates the terrain at an angular frequency ω in accordance with the LOS defined by the angles θ and φ.

Having fixed ω and θ, the pair of equations (2) and (3) (or the equation 4) define an ellipse with its long major half axis $k_x$ equal to $\dfrac{2\omega}{c}$ and its long minor half axis $k_y$ equal to $\dfrac{2\omega}{c}\sin(\theta)$.

The value of the squint angle φ identifies the ellipse point corresponding to wave numbers illuminated by the SAR.

The ratio between $k_x$ and $k_y$ obtained by combining equations (1), (2) and (3) shows that the spectral component illuminated by the SAR has an angular coordinate equal to the angle α of Figure 1:

$$\frac{k_x}{k_y} = \frac{\tan(\phi)}{\sin(\theta)} = \tan(\alpha) \tag{5}$$

This spectral representation is shown in Figure 2.

In practice the SAR systems are provided with a frequency band between a minimum value ω1 and a maximum valve ω2, and an antenna with a radiation beam with aperture in the slant range plane comprised between two values φ1 and φ2. The wave numbers illuminated by the SAR lie within an angular sector of the corona comprised between two ellipses as shown in Figure 3.

Assuming distributed radar objectives, two SAR data items are mutually coherent only if the same wave numbers are illuminated.

In general, this does not happen if even only one of the three characteristic parameters of equations (2) and (3) (frequency, off-nadir and squint) changes, unless the variations are so modest as to leave a significant fraction of the wave numbers in common.

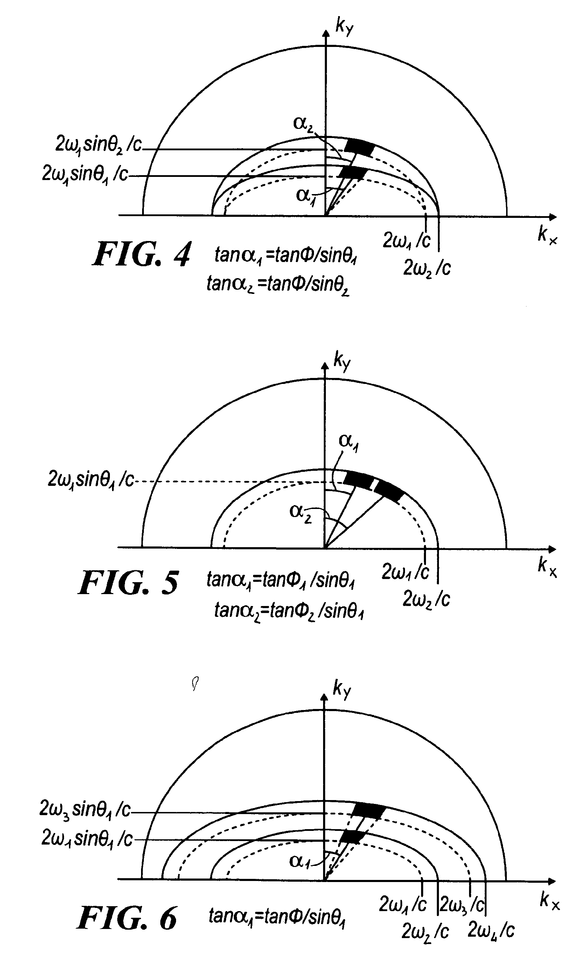

By way of example, Figures 4, 5 and 6 show the variation in the band of wave numbers illuminated by the SAR following a change in only the off-nadir angle (θ) or in only the squint angle (φ) or in only the frequency (ω).

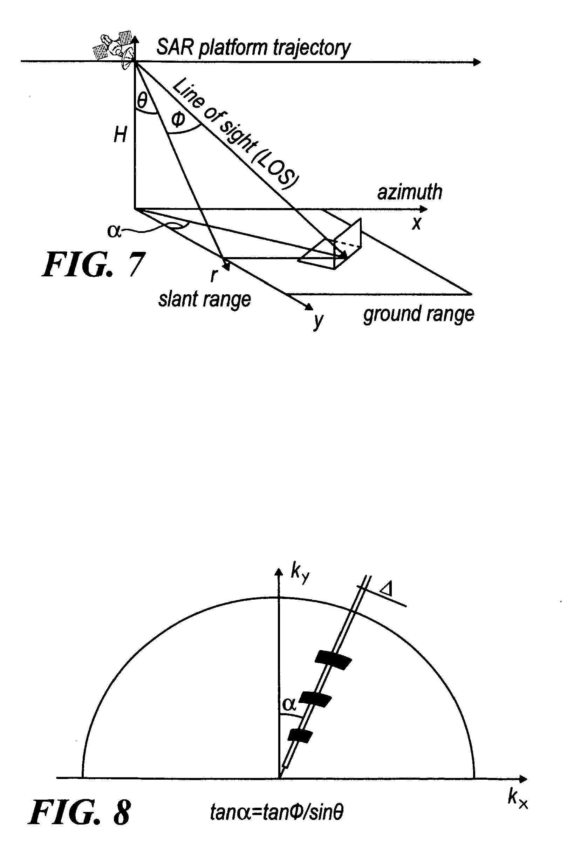

A dihedral target orientated along the angle α is shown in Figure 7.

It has been verified experimentally that in an urban environment (but not only) many target objectives exist shaped as pre-existing dihedra; in this context, a dihedron means two surfaces substantially perpendicular to each other, one horizontal (for example defined by a ground plane) and the other vertical (for example defined by the vertical wall of a building); by their nature, these pre-existing dihedra strongly reflect towards satellite radars for observing the Earth, independently of the radar frequency and of the angle of elevation of the LOS.

The energy reflected is rapidly variable as a function of the angle α.

These properties are reflected in a practically constant spectral pattern in the wave number plane along a narrow beam of constant thickness which forms an angle α to the axis $k_y$ as shown in Figure 8.

The thickness of the wave number beam Δ calculated at -3dB) depends essentially on the dimension of the corner of the dihedron D and is given by

$$\Delta \approx 1.2 \frac{2\pi}{D} \sqrt{\sin^2(\phi) + \cos^2(\phi)\sin^2(\theta)} \tag{6}$$

In the case of small squint angles, as in most of the SAR missions currently operative, this expression can be approximated in the following manner:

$$\Delta \approx 1.2 \frac{2\pi}{D} \sin(\theta) \tag{7}$$

For example, for a dihedron of corner dimension D=3m, and SAR with off-nadir angle of 23 degrees (as in the case of the ERS satellites of the European Space Agency), the value of Δ is about 0.98m-1.0.98 (1/metres or metres[-1]).

To measure in coherent mode the above dihedral targets, in contrast to distributed targets, it is sufficient for the wave number band illuminated by a SAR to be centered angularly about the reference angle α independently of its radial position. As suggested by equation (1), this can be obtained, independently of the SAR frequency, by acting on the off-nadir angle (θ) and/or squint angle (φ), or directly on the so-called platform yaw angle, which coincides with the previously defined angle α.

The data acquisition method consists of illuminating an objective by means of a sensor consisting of the satellite SAR movable along a predetermined trajectory and irradiating an electromagnetic radiation presenting a predetermined frequency and a predetermined ground angle of incidence, and measuring the radiation reflected by said objective.

According to the invention, the electromagnetic radiation of all satellite SARs is irradiated along a predetermined axis, its projection onto the ground forming a predetermined angle α to a reference axis on the ground perpendicular to the trajectory chosen as reference.

In this manner the data obtained from the plurality of satellite SARs are mutually coherent, as they are indicative both of the targets visible by the particular SAR, operating at the particular frequency and at the particular angle of incidence to the ground, and of the same assembly of pre-existing dihedra which are visible, independently of the particular frequency and of the particular angle of elevation of the SAR (Figure 7).

In practice, a single SAR (as sensor) can irradiate along a predetermined axis, the protection of which on the ground forms a predetermined angle α to a reference axis on the ground perpendicular to the trajectory chosen as reference for a SAR of a previous mission; in this manner the data measured are coherent with those already available.

Moreover, a plurality of SARs can irradiate along axes, the projection of which on the ground forms the same angle α to a reference axis on the ground perpendicular to the trajectory chosen as reference, such that the data obtained by each SAR are coherent with those obtained by the others.

In practice, in spectral terms, to observe all these targets in coherent mode by a plurality of SARs of any frequency and orbit, the wave number bands illuminated by different SAR systems are traversed by the spectral beam of the orientated dihedra (as shown by way of example in Figure 8).

The method of the invention is implemented by a data acquisition system comprising a plurality of sensors each consisting of a satellite synthetic aperture radar or SAR.

Each of the satellite SARs is movable along a predetermined trajectory and irradiates an environment with electromagnetic radiation of predetermined frequency and predetermined angle of incidence to the ground; in general, each satellite SAR operates with different trajectories and with frequencies and with angles of incidence to the ground which are different from the other satellite SARs. The SARs are arranged to determine the radiation reflected by one or more objectives, to measure their characteristics.

According to the invention, each satellite SAR irradiates electromagnetic radiation along an axis (LOS), the projection of which on the ground forms a predetermined angle α to a reference axis on the ground perpendicular to the trajectory chosen as reference.

Hence in practice a reference direction is fixed on the ground, and irradiation proceeds along a direction the projection of which on the ground coincides with the reference direction, independently of trajectory of the satellite SAR.

The signal reflected by the objectives on the ground is indicative not only of the particular objectives visible at the particular frequency and angle of incidence of the satellite SAR, but also of the dihedral objectives visible in that particular direction (independently of the frequency and angle of incidence); hence in practice the pre-existing dihedra (which have been found experimentally to be very numerous) constitute a reference which enables the data obtained by satellite SARs working at different frequencies and along different trajectories to be mutually related.

In practice, reasoning in spectral terms, the wave number band of each satellite SAR is traversed by the spectral beam of the dihedra (Figure 8).

The invention also relates to the use of dihedra in the indicated data acquisition method, to constitute objectives to be determined independently of the frequency and angle of incidence of the electromagnetic radiation.

Two examples of the system and method of the invention are described below.

The satellite ERS-2 of the European Space Agency (ESA) will be taken as the reference example, this operating at a frequency of 5.3 GHz with an off-nadir angle of 23 degrees and a practically zero squint angle. This satellite follows a nearly polar orbit at approximately 800 km of altitude, synchronous with the sun, and inclined at about 8 degrees to the meridians at the equator.

With an antenna of length 10 m, the wave number band of this system has an angular width of $\Delta\alpha \approx 0.82$ degrees which, at a frequency of 5.3 GHz, corresponds to a wave number band of $\Delta k_x \approx 1.24\,m^{-1}$ centered about $k_x = 0$ (hence slightly wider than spectral beam of a 3 metre dihedron which equals $\Delta \approx 0.98\,m^{-1}$).

Using equation (2) it can be calculated that by increasing the squint angle by only 0.32 degrees the new wave number band illuminated by the satellite is no longer traversed by the spectral beam of the 3 metre dihedra seen previously. These become invisible by said squint angle modification.

Another SAR satellite will now be considered, orbiting at an altitude of 515 km (such as the TERRASAR-X satellite operating at a frequency of 9.65 GHz). To maintain the orbit synchronous with the sun its inclination to the meridian must be changed by about 1.2 degrees compared with the previous case (ERS). Hence the angle α (at the equator) varies by about 1.2 degrees to the first sensor.

By an analysis similar to the aforegoing, it can be seen that the dihedra seen in the previous example are invisible. In order to again see the same targets in coherent mode, the squint and yaw angles must be adjusted to compensate the 1.2 degree variation such that the wave number band of the new sensor, although not superposed on the ERS band, is traversed by the spectral beam of the dihedra found by the ERS.

It has been found in practice that the method, the data acquisition system and the use of dihedra for data acquisition according to the invention are particularly advantageous because they enable data determined by SARs forming part of different missions operating generally with different trajectories and frequencies to be mutually related.

The method, the data acquisition system and the use of dihedra for data acquisition conceiver in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

**Claims**

1. A data acquisition method consisting of illuminating an objective by means of at least one sensor movable along a predetermined trajectory and irradiating an electromagnetic radiation presenting a predetermined frequency and a predetermined angle of incidence to the ground, and measuring the radiation reflected by said objective, **characterised in that** the electromagnetic radiation is irradiated along a predetermined axis, the projection of which forms on the ground a predetermined angle $\alpha$ to a reference axis on the ground perpendicular to the trajectory.

2. A method as claimed in claim 1, **characterised in that** said projection of said predetermined axis on the ground defines a reference direction on the ground, parallel to which lie the projections of the aiming directions of the antennas or LOS along which a plurality of said sensors irradiate.

3. A method as claimed in one or more of the preceding claims, **characterised in that** said sensors are satellite synthetic aperture radars or SARs.

4. A data acquisition system comprising at least one sensor movable along a predetermined trajectory and irradiating an electromagnetic radiation presenting a predetermined frequency and a predetermined angle of incidence to an environment, and arranged to measure the radiation reflected by one or more objectives, **characterised in that** said at least one sensor irradiates along a predetermined axis, the projection of which forms on the ground a predetermined angle $\alpha$ to a reference axis on the ground perpendicular to the trajectory chosen as reference.

5. A system as claimed in the preceding claim, **characterised in that** said reference axis defines a direction parallel to which lie the ground projections of the aiming directions or LOS of a plurality of said sensors.

6. A system as claimed in claim 4 or 5, **characterised in that** said sensors are satellite synthetic aperture radars or SARs.

7. The use of dihedra in a data acquisition method consisting of illuminating an objective by means of at least one sensor movable along a predetermined trajectory and irradiating an electromagnetic radiation presenting a predetermined frequency and a predetermined angle of incidence, and measuring the radiation reflected by said objective, wherein the electromagnetic radiation is irradiated along a predetermined axis, the projection of which forms on the ground a predetermined angle $\alpha$ to a reference axis on the ground perpendicular to the trajectory chosen as reference, to constitute objectives to be determined independently of the frequency and of the angle of incidence of the electromagnetic radiation.

8. The use of dihedra as claimed in the preceding claim, **characterised in that** said sensors are satellite synthetic aperture radars or SARs.

**FIG. 1**

**FIG. 2**

$$tan\alpha = tan\Phi/sin\theta$$

**FIG. 3**  $tan\alpha_1 = tan\Phi_1/sin\theta$
$tan\alpha_2 = tan\Phi_2/sin\theta$

$2\omega_1 sin\theta_2 /c$
$2\omega_1 sin\theta_1 /c$

$\alpha_2$
$\alpha_1$

$2\omega_1 /c$
$2\omega_2 /c$

**FIG. 4**  $tan\alpha_1 = tan\Phi / sin\theta_1$
$tan\alpha_2 = tan\Phi / sin\theta_2$

$2\omega_1 sin\theta_1 /c$

$\alpha_1$
$\alpha_2$

$2\omega_1 /c$
$2\omega_2 /c$

**FIG. 5**  $tan\alpha_1 = tan\Phi_1 / sin\theta_1$
$tan\alpha_2 = tan\Phi_2 / sin\theta_1$

$2\omega_3 sin\theta_1 /c$
$2\omega_1 sin\theta_1 /c$

$\alpha_1$

$2\omega_1 /c$  $2\omega_3 /c$
$2\omega_2 /c$  $2\omega_4 /c$

**FIG. 6**  $tan\alpha_1 = tan\Phi / sin\theta_1$

SAR platform trajectory

θ

Φ

Line of sight (LOS)

H

azimuth

x

α

**FIG. 7**

r

slant range

y

ground range

$k_y$

Δ

α

$k_x$

**FIG. 8**    $tan\alpha = tan\Phi / sin\theta$

**European Patent Office**

# EUROPEAN SEARCH REPORT

Application Number

EP 06 02 1179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAT SOON YEO ET AL: "A New Subaperture Approach to High Squint SAR Processing" IEEE TRANSACTIONS ON GEOSCIENCE AND REMOTE SENSING, IEEE SERVICE CENTER, PISCATAWAY, NJ, US, vol. 39, no. 5, May 2001 (2001-05), XP011021759 ISSN: 0196-2892 Section I-III * page 954 - page 957; figure 1 * | 1-6 | INV. G01S13/90 |
| A | | 7,8 | |
| X | US 6 492 932 B1 (JIN MICHAEL Y [US] ET AL) 10 December 2002 (2002-12-10) * abstract; figure 1 * | 1-6 | |
| A | | 7,8 | |
| A | ZHENG-SHE LIU ET AL: "Feature extraction of a single dihedral reflector from SAR data" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 5, 21 April 1997 (1997-04-21), pages 4133-4136, XP010226712 ISBN: 0-8186-7919-0 * the whole document * | 7,8 | TECHNICAL FIELDS SEARCHED (IPC)<br><br>G01S |
| A | US 6 150 972 A (BICKEL DOUGLAS L [US] ET AL) 21 November 2000 (2000-11-21) * abstract; figures 1,2 * | 1-8 | |

The present search report has been drawn up for all claims

| Place of search | Date of completion of the search | Examiner |
|---|---|---|
| Munich | 16 January 2007 | FANJUL CAUDEVILLA, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 777 550 A1**

## ANNEX TO THE EUROPEAN SEARCH REPORT
## ON EUROPEAN PATENT APPLICATION NO.

EP 06 02 1179

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2007

| Patent document cited in search report | | Publication date | Patent family member(s) | | Publication date |
|---|---|---|---|---|---|
| US 6492932 | B1 | 10-12-2002 | EP | 1410066 A2 | 21-04-2004 |
| | | | WO | 02101409 A2 | 19-12-2002 |
| US 6150972 | A | 21-11-2000 | NONE | | |

EPO FORM P0459

For more details about this annex : see Official Journal of the European Patent Office, No. 12/82

11